# EUROPEAN PATENT APPLICATION

(11) **EP 4 776 263 A1**
(43) Date of publication of application: **15.07.2026**
(21) Application number: 26150384.1
(22) Date of filing: 06.01.2026
(51) Int. Cl.: G09B 9/02, G09B 9/04, G09B 9/12

(54) **MOTION GENERATION APPARATUS**

(30) Priority: 10.01.2025 GB 202500323
(71) Applicant: Ansible Motion Limited, Wiltshire, BA15 1GB (GB)
(72) Inventor: STEVENS, Robert, Bradford on Avon, BA15 1GB (GB)
(74) Representative: Abel & Imray LLP

(57) **Abstract**

A motion generation apparatus comprising: a platform (3) for supporting an occupant; a base assembly (5); and three support arms (9a-9c) arranged to support the platform above the base assembly. Each support arm is connected at its lower end to a carrier (13a-13b) via an arm-carrier joint (39), and is connected at its upper end to the platform at an arm-platform joint (29). Each carrier (13a-13b) is moveably mounted on the base assembly (5) such that the carrier (13a-13b) is independently moveable in a first (X) direction and in a second (Y) direction, the first and second directions being mutually perpendicular to one another. For each support arm (9a-9c), the arm-carrier joint (39) may be a revolute joint having a single rotational degree of freedom about a pivot axis, and the arm-platform joint (29) may be a rotational joint having three rotational degrees of freedom. A torsion bar 49 may be arranged to provide a biasing torque to offset the payload of the apparatus.

## Description

### BACKGROUND OF THE INVENTION

The present invention relates to motion generation apparatus. The motion generation apparatus may have particular application, for example, in simulating motion relating to a vehicle, for example a land, air, space or sea vehicle, including a motorised land vehicle, aircraft, spacecraft, or watercraft. Some embodiments of the invention may be especially suitable to automotive simulations, including automotive motorsport simulations.

Motion platform systems are known that provide for multiple degrees of freedom of movement, allowing an occupant to be subjected to a range of motions that provide a realistic sensation of being in the environment under simulation, such as a sensation of occupying and/or operating a vehicle such as an automobile. Such systems generally aim to generate motion of an occupant carrier that is closely aligned to the motion of the vehicle. The simulated motion can then facilitate stimulation of the somatosensory and vestibular systems of an occupant and improve the occupant's ability to operate in and/or control a real vehicle that is the subject of the simulation.

For example, a motion platform system including an occupant carrier mounted to the platform may provide an occupant with an accurate sensation of being in a motor racing car. In a motion platform system having six degrees of freedom, there may be provided, for example, translational motion of the platform in the surge, sway, and heave directions, i.e. along respective X-, Y-, and Z-axes of the motion platform, and rotational motion in roll, pitch, and yaw, i.e. about the respective X-, Y-, and Z-axes of the platform.

Some known motion platform systems use parallel manipulators. For example, Stewart platforms have a platform connected to a base unit by six telescopic struts or actuators. Stewart platforms tend not to be suitable for many simulation requirements and several arrangements have been suggested which address some of the drawbacks of this type of motion platform. A selection of the most relevant arrangements is discussed below:

The motion platform system, described in WO 2014/087172 (Williams Grand Prix Engineering), aims to alleviate some of the limitations of the Stewart platform. The height of an occupant carrier platform in WO'172 is adjusted by a set of first motors each of which drives a first support, or carriage, along an inclined surface of a second support, or wedge to independently control the height of respective occupant carrier support rails. The occupant carrier support rails slidably support the platform for relative sliding movement in a surge direction. The second supports are located on opposite sides of the occupant carrier support rails, and are driven by second motors movable along a transversely extending base track. Yaw and surge motions are provided by the second motors driving the second supports laterally along the base track to move the converging occupant carrier support rails laterally together or apart. Due to the nature of the arrangement of the convergently angled occupant carrier platform between the convergent occupant carrier support rails, it has been found that the arrangement in WO' 172 may have insufficient authority (i.e. the ability to timely and accurately control the motion platform) and/or and insufficiently long range of travel in the surge axis. Whilst it is possible to increase the "V" angle of the occupant support rails in the platform system design to increase authority, this may negatively impact overall surge travel.

An alternative motion platform arrangement is shown in US2018/0096622 (McLaren Applied Technologies Limited). The arrangement in US'622 has a platform mounted on four support arms, each support arm being mounted on a sled. In US'622, the surge motion is created by moving sleds on either side of the platform towards each other. The sides of the platform are convergent, so this movement creates a sliding motion at the coupling between the support arms and the edges of the platform, such that the platform slides forward. The arrangement in US'622 may perform well for certain types of movement, but the arrangement in US'622 has also been found to suffer from similar drawbacks to WO' 172, namely it may have insufficient authority (i.e. the ability to timely and accurately control the motion platform) and/or and insufficiently long range of travel in the surge axis.

In general, provision of insufficient surge travel may create a problem during sustained brake cueing which can lead to miscuing the occupant with a perception of brake fade as the travel runs out before the platform system has finished the cue. It can be impractical to extend the range of surge motion in known designs due to overhanging portions of the platform hitting the floor. Furthermore, when known motion platforms are at the extremities of surge, the centre of gravity of the moving mass is often in a substantially different location to when the platform is in a neutral position. Gas struts are often tuned to support the load primarily with the platform positioned relatively close to the neutral position. In extreme positions, the platform may be inherently unbalanced and the support provided by the gas struts may be sub-optimal. Control in such extreme positions of a platform system can then be difficult, as holding such positions typically creates a peak current demand in drive motors and can lead to system instability.

WO 2021/019213 discloses a motion platform having an occupant carrier portion comprising first, second and third guide portions pivotally connected by respective coupling members to first, second and third control pillars constrained for independent movement in a plane. The guide portions of the occupant carrier portion are angled with respect to the plane and with respect to each other, and constrain motion of the coupling members along the guide portions.

WO 2024/094960 discloses a motion platform comprising couplings that engage inclined portions of control members. Laterally driving the control members forces the coupling in a direction along the inclined path.

Whilst the arrangements in WO'213 and WO'960 perform very well for particular applications and in particular performance envelopes, they may not necessarily be so suitable for other applications where other areas of the performance envelope are more relevant.

Other examples of prior art show multi-stage systems in which, for example, one stage provides yaw, surge and sway and another stage provides heave, pitch and roll. Multi-stage systems may negatively impact the stiffness and high frequency response of the motion platform system. Those skilled in the art will appreciate that the frequency response of the motion platform system (i.e. its ability to make high speed movements such as to simulate a shock motion associated with hitting a bump in a road) is tied to the mechanical stiffness, the moving mass of the motion platform, and to the actuators used to impart motion. Such multi-stage platform systems can be heavy, and excess weight and lack of stiffness has a significant negative effect on the frequency response of the motion platform, particularly impacting the high frequency response.

Aspects of the present invention seek to mitigate or overcome at least one problem of the prior art, and/or to provide an improved motion generation apparatus.

### SUMMARY OF THE INVENTION

According to a first aspect of the invention, there is provided a motion generation apparatus comprising: a platform for supporting an occupant; a base assembly; and three support arms arranged to support the platform above the base assembly. Each support arm may be connected at its lower end to a carrier via an arm-carrier joint, and may be connected at its upper end to the platform at an arm-platform joint. Each carrier is moveably mounted on the base assembly such that the carrier is independently moveable in a first (X) direction and in a second (Y) direction, the first and second directions being mutually perpendicular to one another. For each support arm, one of the arm-carrier joint or the arm-platform joint may be a revolute joint having a single rotational degree of freedom about a pivot axis, and the other of the arm-carrier joint or the arm-platform joint may be a rotational joint having three rotational degrees of freedom.

Such an arrangement enables movement of the platform in six degrees of freedom, and has been found to enable relatively isotropic performance across that movement range. In particular, the arrangement may enable improved surge performance, without necessarily negatively impacting the performance in other degrees of motion, and/or without unduly reducing the level of authority.

The first and second directions are mutually perpendicular. The first and second directions may lie in a horizontal plane. Horizontal directions or planes, as used herein with respect to the motion generation apparatus and components thereof, mean directions or planes generally parallel to the ground or other support surface, or surfaces, to which the motion generation apparatus is mounted. Vertical or vertically will be understood to mean perpendicular to such a lateral or horizontal direction or plane.

In principle, the movement of the carrier in the X and Y directions can be provided in a number of different ways. However, in a preferred embodiment the base assembly comprises a first set of tracks for allowing movement of the carrier in the first, X, direction, and a second set of tracks for allowing movement of the carrier in the second, Y, direction. The carriers may be mounted on the first set of tracks for movement along the tracks in the first direction. The first set of tracks may be mounted for movement along the second set of tracks. In such an embodiment, the movement of the carriers in the second direction may be enabled via movement of the first set of tracks along that direction. The first set of tracks may comprise three tracks, one of the carriers being mounted on each of those tracks.

Each rotational joint has three rotational degrees of freedom. Preferably each rotational joint does not have any translational degrees of freedom. The rotational joint may comprise any suitable form of rotatable joint, such as a ball joint, or a gimbal or universal joint.

Each revolute joint has a single rotational degree of freedom about the pivot axis. Preferably, each revolute joint does not have any translational degrees of freedom.

The pivot axes of the revolute joints may all lie within, the same, or parallel, planes. The pivot axes of the revolute joints may be orientated such that they are non-parallel to each other. More preferably, the pivot axes are orientated at substantially equal angles to each other, for example at 120 degrees to each other.

For each support arm, the arm-platform joint may be the revolute joint having a single rotational degree of freedom. For each support arm, the arm-carrier joint may be the rotational joint having three rotational degrees of freedom. Such an arrangement has been found to be especially beneficial, for example in terms of enabling the 6 degrees of freedom movement, and the ease of control of the motion control apparatus.

Each support arm may comprise, or be in the form of, a wishbone. The wishbone may be arranged such that the arm-carrier joint is located at the convergent end of the wishbone. The wishbone may be arranged such that the arm-platform joint is located at the divergent end of the wishbone. Such an arrangement has been found to be especially beneficial, particularly for embodiments in which the arm-platform joint is the revolute joint.

A, or each, support arm may be resiliently biased against rotation about the pivot axis. A, or each, support arm may be resiliently biased against a torque, for example about the pivot axis, arising from the static load of the platform (and components mounted thereon). Such an arrangement facilitates payload offset and may enable the actuation assembly for driving the motion control apparatus to be kept relatively small/low power.

A, or each, arm may comprise a resilient biasing member for providing the resilient biasing of rotation about the pivot axis. The reliant biasing member may be a torsional biasing member, configured to provide a biasing torque about the pivot axis. The biasing torque may be arranged to act against a counter-torque arising from the static load of the platform. The torsional biasing member may be a torsion bar.

A third, Z, direction may extend in a direction perpendicular to the first and second X-Y directions. The third direction may extend vertically upward from the X-Y plane. Each support arm is preferably inclined at an angle to the third direction.

The apparatus may be configurable between a neutral configuration and a moving configuration. The neutral configuration may be the configuration in which the apparatus is placed when at-rest. In the neutral configuration, the apparatus may be configured such that the platform is positioned at a datum position in each of the six degrees of movement.

In the neutral configuration, the magnitude of the angle of inclination of a, and preferably each, support arm (to the third direction) may be between 30 and 60 degrees, and more preferably between 40 and 50 degrees. The magnitude of the angle of inclination may be around 45 degrees. Such an arrangement has been found to be especially beneficial, particularly for embodiments comprising a torsional biasing member, because it may enable a relatively constant torque to support the payload across a range of motion. For example, where the angle of a support arm reduces (i.e. it moves closer to the vertical) such that the torque, about the pivot axis, arising from the payload reduces, the torsional biasing member may be arranged to provide a correspondingly reduced biasing force in the opposing direction. Whereas, where the angle of the support arm increases (i.e. it moves closer to the horizontal) such that the torque, about the pivot axis, created by the payload increases, the torsional biasing member may be arranged to provide a correspondingly increased biasing force in the opposing direction.

The motion generation apparatus may comprise an actuation assembly for effecting movement of the platform. The actuation assembly may be arranged to actuate each of the carriers in the first and second directions. In some embodiments, the actuation assembly may comprise a first set of actuators for moving the carriers relative to the first set of tracks, and a second set of actuators for moving the first set of tracks relative to the second set of tracks. The actuation assembly may comprise one or more electric linear motors, for example an ironless, or air core, linear motors. Alternatively, or additionally, iron core or magnet-free-track linear motors may be employed in the actuation assembly.

The motion generation apparatus may comprise a controller configured to control the actuation assembly. The controller is preferably configured such that the platform is able to be manoeuvred in 6 degrees of freedom, via control of the actuation assembly.

The arm-platform and the arm-carrier joints may be freely rotatable. Rotation about each of these joints may result from actuation forces transmitted to the joints via movement of the carriers. That is, there are preferably no additional actuators to directly drive the or each arm-platform and/or arm-carrier joint. This facilitates a reduction in the moving mass and an increase in performance of the platform.

The motion generation apparatus may further comprise an occupant carrier fixed relative to the platform. The occupant carrier may include, for example, seating for a single occupant, or tandem, side by side, or multiple seating for multiple occupants.

According to a second aspect of the invention, there is provided a motion generation apparatus comprising: a platform comprising an occupant carrier; a base assembly having a first-direction set of tracks and an orthogonal second-direction set of tracks, the first-direction set of tracks being moveable in a direction along the second-direction tracks; three carriages mounted on the first-direction set of tracks and moveable in a direction along the first-direction, such that each carriage is independently moveable, within the plane containing the first and second directions, on the base assembly; three wishbone arms arranged to support the platform above the base assembly, each wishbone arm being connected at its lower, converged, end to a respective one of the carriages via a joint with three degrees of rotational freedom, and being connected at its upper, diverged, end to the platform at a revolute joint having a single degree of freedom about a pivot axis; and an actuation assembly for moving the first-direction tracks along the second-direction tracks and for moving the carriages along the first-direction tracks, thereby moving the occupant carrier in any or all of six available degrees of freedom. The first-direction, may be an X-direction. The second-direction may be a Y-direction.

According to a further aspect of the invention, there is provided a motion platform system for simulating vehicular motion, comprising motion generation apparatus as described above in relation to the first and/or second aspects of the invention. The motion platform system may be configured to simulate motion of a land, air, space or sea vehicle, including an aircraft, spacecraft, hovercraft, watercraft or land vehicle. In preferred embodiments, the motion platform system may be configured to simulate, for example, a land motor vehicle such as a single seat performance motor car, or a tracked or off-road vehicle. The motion platform system may include a screen for displaying images to the user of the motion generation apparatus. For example, the screen may display images of a race track along which the simulated racing car is travelling.

It will of course be appreciated that features described in relation to one aspect of the present invention may be incorporated into other aspects of the present invention.

### DESCRIPTION OF THE DRAWINGS

In order that the invention may be well understood, by way of example only, various embodiments of the present invention will now be described with reference to the accompanying schematic drawings of which:
Figure 1 is a perspective view of a motion generation apparatus according to a first embodiment of the invention, showing the apparatus in a neutral state;
Figure 2 is a view of the apparatus of Figure 1, with the occupant carrier removed;
Figure 3 shows the base assembly and carriers in the apparatus of Figure 1 in isolation;
Figures 4a and 4b are perspective views of the platform and support arms of the apparatus of Figure 1 in isolation;
Figure 4c is a plan view of the underside of the platform and support arms in Figures 4a and 4b;
Figure 5 shows one of the support arms in the apparatus of Figure 1;
Figure 6 is a schematic view illustrating the action of the torsional biasing member in one of the support arms of the apparatus of the first embodiment; and
Figure 7 is a graph view illustrating the payload offset over a range of motion of the arm in Figure 6.

### DETAILED DESCRIPTION

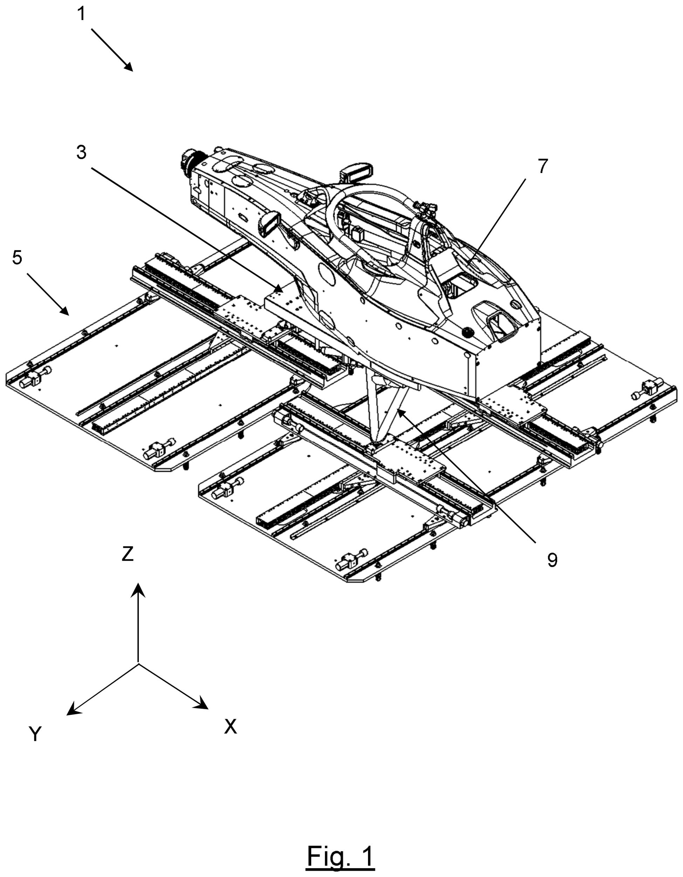

Figure 1 is a perspective view from above a motion generation apparatus 1 in accordance with a first embodiment of the invention. The apparatus 1 is shown in an at-rest, or neutral, configuration.

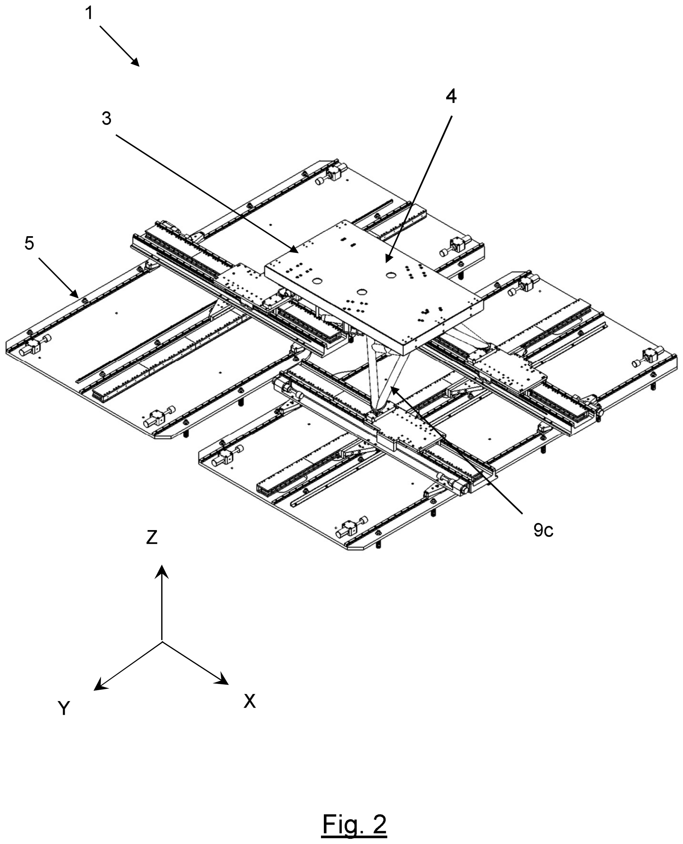

The motion generation apparatus 1 comprises a platform 3 on which an occupant carrier 7 is mounted. In the first embodiment of the invention, the occupant carrier 7 replicates the seating arrangement in a single-seater racing car. However, the motion generation apparatus 1 may also be used with other occupant carriers depending on the type of vehicle being simulated. In that respect, the platform 1 comprises a series of mounting points 4, to which other occupant carriers may be fixedly attached (see Figure 2). The motion of the platform 3 determines the motion of the relevant occupant carrier mounted thereon, so for the purposes of the description below, it is the motion of the platform 3 that is described in detail.

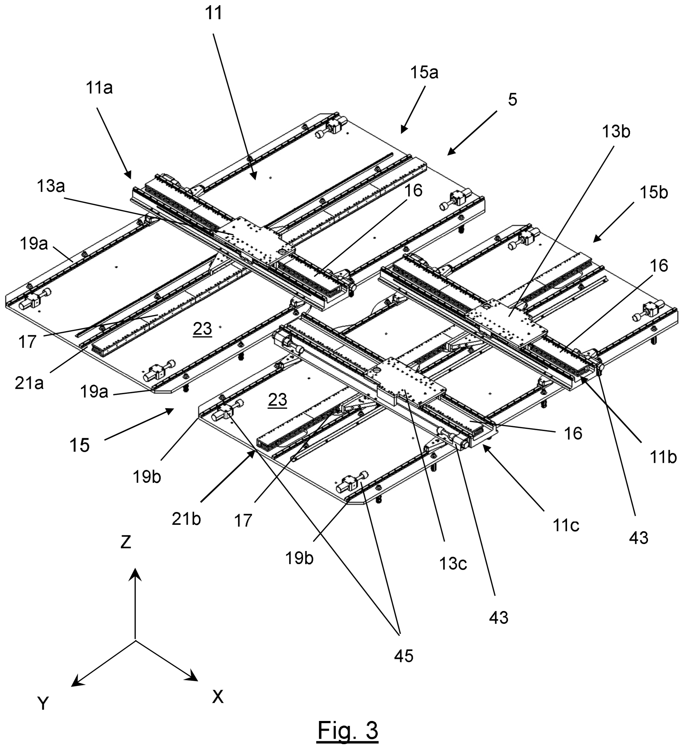

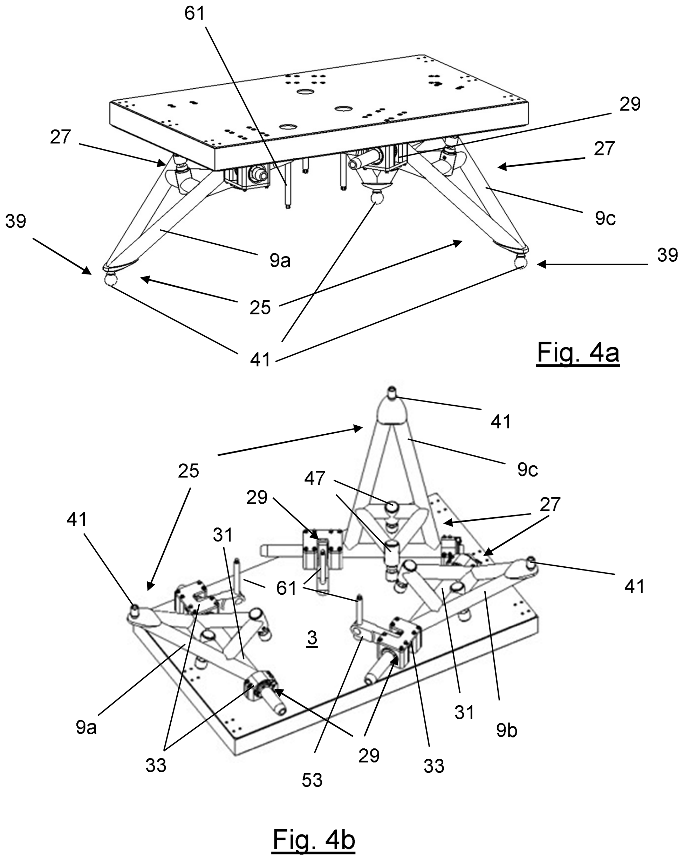

The platform 3 is supported above a base assembly 5 by three support arms 9a-9c (only one of the support arms 9c being visible in the view of Figure 1). These parts of the apparatus are described in more detail below with reference to Figure 3 and Figures 4a-4c respectively.

Referring first to Figures 3, the base assembly 5 comprises a first set of tracks 11. The set of tracks is generally designated 11 and comprises three individual tracks 11a-11c. Each individual track 11a-11c extends in the X-direction (i.e. is aligned with the surge direction for the platform 3), and each of the individual tracks 11a-11c is laterally offset from the other tracks 11a-11c.

A carrier 13a-13c is moveably mounted on each of the first set of tracks 11a-11c. The carrier 13a-13c is constrained to move back and forth along its respective track in only the X-direction. That movement is effected by a linear electric motor 16 located beneath each carrier 13a-13c and integrated into each track 11a-11c.

The base assembly 5 also comprises a second set of tracks 15. The second set of tracks is generally designated 15 and comprises two individual tracks 15a-15b. Each individual track 15a-15b extends in the Y-direction (i.e. is aligned with the sway direction for the platform 3) and comprises two outer guide rails 19a/b and a central rail 21a/b. The two tracks 15a-15b are each associated with a base plate 23 and are longitudinally offset from each other. Each base plate is attached to the floor with suitable anchor points.

The first set of tracks 11 is moveably mounted on the second set of tracks 15. More specifically, the front track 11a of the first set 11 is moveably mounted on the front track 15a of the second set 15, and the rear tracks 11b-11c of the first set 11 are moveably mounted of the rear track 15b of the second set 15. Each track 11a-11c of the first set 11 is constrained to move back and forth along its respective track 15a, 15b of the second set 15 in only the Y-direction. That movement is effected by a linear electric motor 17 located on the side of each track 11a-11c in the first set of tracks 11.). By moving the first set of tracks 11 in this manner, the carriers 13a-13c are able to be moved back and forth in the Y direction.

By actuating the carriers 13a-13c to move along the first set of tracks 11, and by actuating the first set of tracks 11 to move along the second set of tracks 15, each carrier 13a-13c is able to be independently moved within the horizontal X-Y plane.

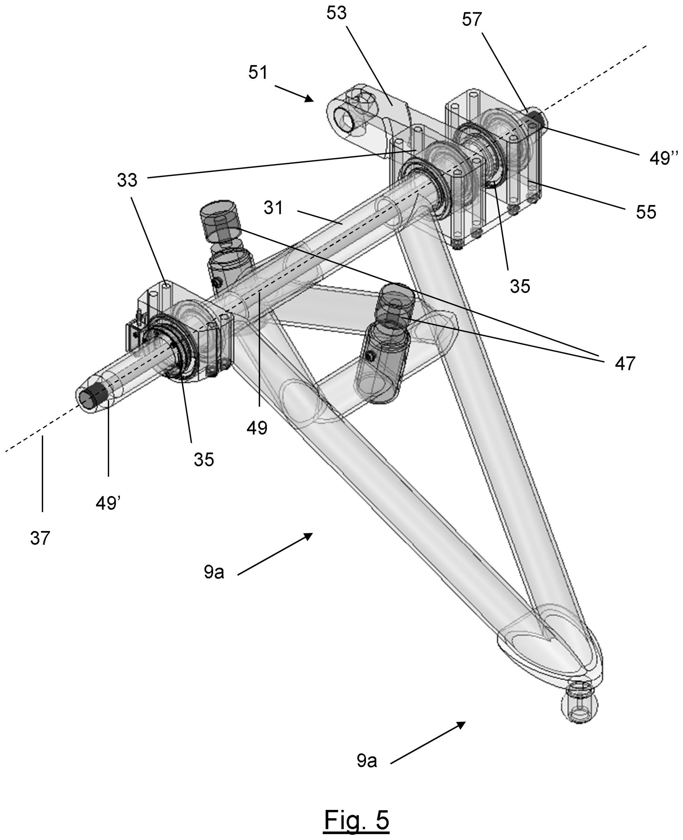

Turning now to Figures 4a-4c, these images show different views of the platform 3, along with the three support arms 9a-9c configured to hold the platform 3 above the base assembly 5. Reference is also made to Figure 5 which is a view of one of the support arms 9a in isolation. For the sake of clarity, not all elements are labelled for every component. For example, features in common for all of the support arms may be labelled on only some of those arms.

Each support arm 9a-9c comprises a wishbone, having a converged lower end 25, from which two bifurcated arms extend upwardly towards a diverged upper end 27. An axle 31 (described below) links the two bifurcated arms at the top of the support arm 9a-9c.

The upper end 27 of each support arm 9a-9c is connected to the underside of the platform 3 at a platform-arm joint 29. The platform-arm joint 29 is in the form of a revolute joint comprising two brackets 33, through which the axle 31 is received. As shown most clearly in Figure 5, the axle 31 is part of the support arm 9a-9c and extends across the top of the support arm, thereby linking either side of the diverged wishbone arms. The axle 31 is received in rotational bearings 35 held in the brackets 33. The brackets 33 are spaced apart on the underside of the platform and are fixed relative to the platform such that the revolute joint 29 is a rotational joint with only a single rotational degree of freedom, about a pivot axis 37 (that pivot axis also being coaxial with the axle 31 extending across the top of the support arm).

An attachment link assembly 51 is also provided, beyond the end of the axle 31. That attachment link assembly 51 is described in more detail below with reference to Figures 5 to 7 and the torsional biasing arrangement.

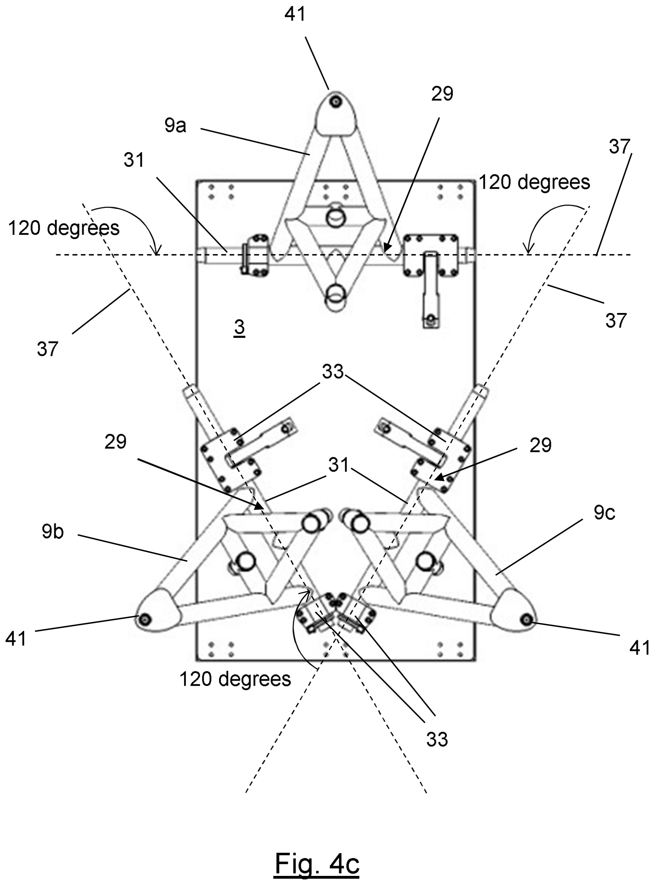

As most clearly shown by Figure 4c, the pivot axes 37 of the revolute joints 29 associated each support arm are orientated at an angle to each other. More specifically, the pivot axes 37 are equally-spaced from each other by 120 degrees.

The lower end 25 of each support arm 9a-9c is connected to the carrier (not shown in Figures 4a-4c) via an arm-carrier joint 39. The arm carrier joint 29 is a spherical joint comprising a ball 41, received in a corresponding cup (not shown) fixed to the carrier. Each spherical joint 29 is fixed for preventing translational movement relative to the carrier 13a-13c, but allows free rotational movement at this joint 39, in all three rotational degrees of freedom. In other embodiments, the joint may be another type of joint that allows this movement, such as a gimbal.

To limit the extent of travel in some directions, the motion generation apparatus 1 includes various stops and buffers. Notably: each of the tracks 11a-11c in the first set of tracks 11 includes a hydraulic buffer assembly 43 for limiting movement of the carrier in the X direction (see Figure 3); each of the tracks 15a-15b in the second set of tracks 15 includes a hydraulic buffer assembly 45 for limiting movement of the first set of tracks 11 in the Y direction (see Figure 3); and each support arm 9a-9c includes a pair of hydraulic stops 47 connected to each support arm and configured to limit the extent of rotation of each arm about the respective pivot axis (see Figures 4a and 4b).

The arrangement in the first embodiment of the invention allows movement of the platform in all 6 degrees of freedom. The movement is effected via actuation of the carriers 13a-13c and the first set of tracks 11 upon which they are mounted: Movement in the X direction (surge) is effected by simultaneous actuation of all the carriers 13a-13c along the first set of tracks; movement in the Y direction (sway) is effected by simultaneous actuation of the first set of tracks 11 along the second set of tracks; movement in the Z direction (heave) is effected by actuation of the front 13a and rear 13b, 13c carriers towards/away from each other along the first set of tracks 11, whilst also moving the rear tracks in the first set of tracks 11b 11c laterally towards/away from each other in the Y direction, along the second set of tracks. Rotational movement can also be achieve as follows: rotation about the X axis (roll) is effected by simultaneously actuating the first set of tracks in the same direction along the Y-direction tracks, whilst actuating the carriers 13a-13c on opposing sides of the centre-line, in opposite directions along the first set of tracks 11; rotation about the Y axis (pitch) is effected by simultaneously actuating the rear tracks 11b, 11c of the first set of tracks towards/away from each other along the second track 15b, whilst actuating the carriers 13a-13c along the first set of tracks 11; and rotation about the Z axis (yaw) is effected by simultaneously actuating the rear tracks 11b, 11c of the first set of tracks (along the second track 15b), in the opposite direction to the front track 11a of the first set of tracks (along the second track 15a), whilst actuating the carriers 13b-13c either side of the centre of rotation, in opposing directions along the first set of tracks 11.

More complex motion having any, or all, of these components of motion is also possible by combining the movements described above. In that respect, the motion control apparatus includes a controller (not shown), configured to control the linear motors 16 ,17 (and hence the movement of the carriers 13a-13c and the first set of tracks 11a-11c) in a manner that can generate the desired platform motion for a given scenario.

The apparatus of the first embodiment of the invention has been found to be especially beneficial in terms of enabling movement of the platform in six degrees of freedom, whilst also enabling relatively isotropic performance across that movement range. In particular, the arrangement may enable improved surge performance, without necessarily negatively impacting the performance in other degrees of motion, and/or without unduly reducing the level of authority.

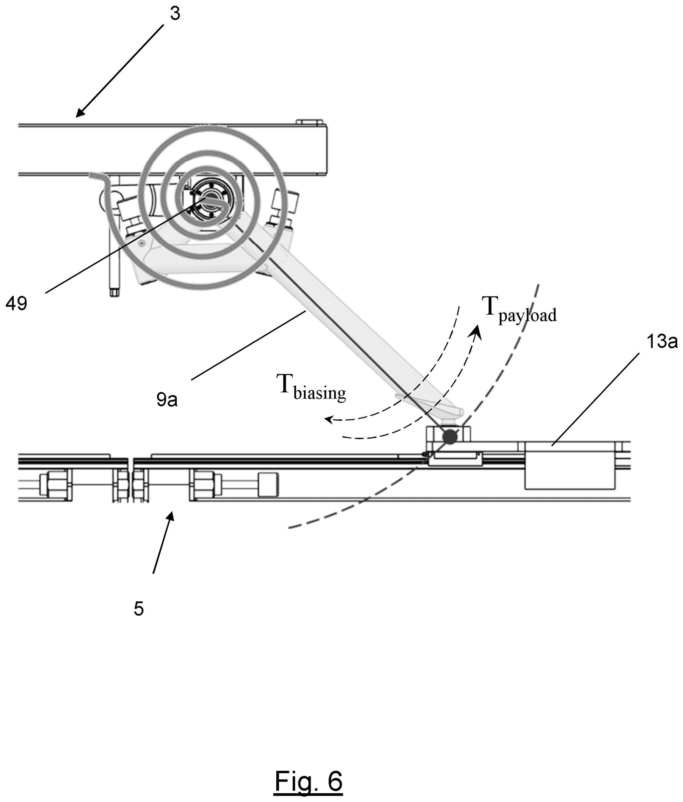

The apparatus of the first embodiment also has an especially beneficial arrangement for enabling payload offset, as will now be described with reference to Figures 5 and 6.

Referring first to Figure 5, each support arm includes a torsion bar 49 extending through the centre of the axle 31 and located co-axially with the pivot axis 37 (and coaxially with the axle 31). The torsion bar is formed of Maraging steel C300 and is designed to withstand a defection (twist) of up to 69.5 degrees. One end 49' of the torsion bar is received in a splined connection with the axle 31 such that it is rotationally fixed with respect to that end of the axle 31.

The opposing end 49" of the torsion bar 49 is held in a splined connection with the attachment link assembly 51. The attachment link assembly 51 comprises a link 53 coupled at one end to the underside of the platform 3 (see Figure 4b). The other end of the link 53 is fixedly attached to a cylindrical tube 57. The tube 57 is coaxial with the pivot axis 37 but is not mechanically coupled to the axle 31 of the support arm 9a-9c. The tube 57 is held in the bracket and bearing assembly 55. The cylindrical tube 57 forms a splined connection to the end 49" of the torsion bar 49. As the tube 57 is fixed to the link 51, the end 49" of the torsion bar is thus rotationally fixed relative to the platform 3. Hence as the support arm 9a-9c (and hence the axle 31) rotates relative to the platform 3, about the pivot axis 37, the torsion bar is twisted through the corresponding angle of rotation.

Figure 5 shows the front support arm 9a, but a corresponding arrangement is provided in the other arms 9b-9c. In those arms, the cylindrical tube 57 is somewhat longer. This is because it is desirable to keep the same length torsion bar for each arm 9a-9c, but due to the relatively tight space requirements towards the rear of the platform 3 (see Figure 4c) the torsion bar cannot extend quite so far past the rearmost bracket 33.

When the apparatus is in a neutral position (for example as shown in Figure 1), each of the support arms 9a-9c is splayed out from the platform 3 such that each arm is inclined at an angle of around 45 degrees to the vertical (Z) direction. As a result of the pivot axis 37 of each arm 9a-9c, being offset from its respective arm-carrier joint 39 below it, the payload of the apparatus (i.e. the weight of the platform, the occupant carrier and any occupant therein) generates a torque T_{payload} around each arm-platform j oint 29.

The torsion bar 49 in each axle 31 is designed and sized to counteract this torque and exerts a biasing counter-torque T_{biasing}. This is illustrated in Figure 6, with the torsion bar being schematically illustrated using an image of a torsion spring.

This is beneficial because it may enable the motors 16, 17 for actuating the carriers and tracks to be sized primarily for overcoming only the dynamic loads, rather than needing to be sized to also resist all the static forces arising from the payload.

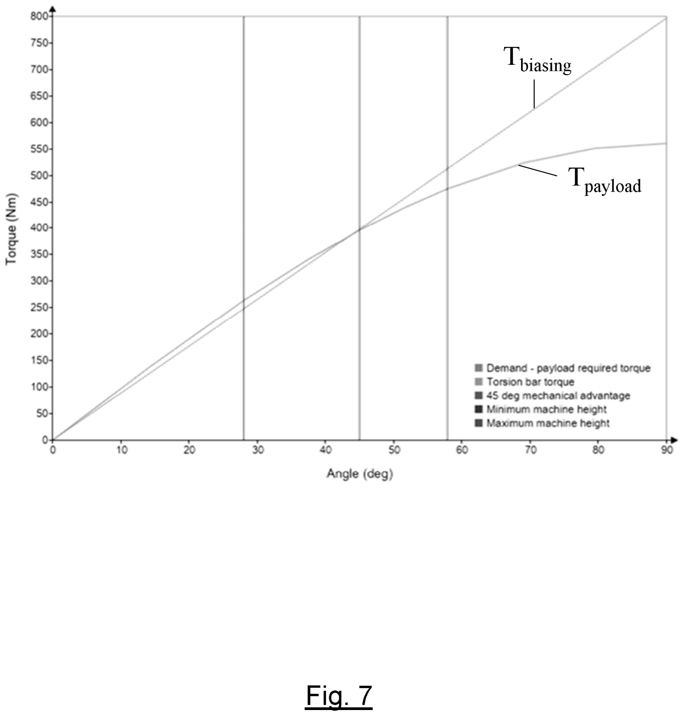

The torsion bar in the first embodiment in designed to provide a relatively linear torque response across a range of rotational displacement. This is a relatively close match to the opposing torque that arises from the payload acting on the support arm over a similar range of motion. This behaviour is illustrated in the graph of Figure 7, which shows the torque T_{payload} generated by the payload and the counter-torque T_{biasing} exerted by the torsion bar, over a range of angles of displacement of a support arm 9a-9c. Within the desired motion envelope of the support arms 9a-9c (which is around 38 to 58 degrees for this embodiment, as marked by the vertical lines on Figure 7) the torque response of the torsion bar T_{biasing} closely matches the change in torque T_{payload} created by the payload. For example, where the angle of a support arm reduces (i.e. it moves closer to the vertical) the torque arising from the payload T_{payload} reduces, and the torsional biasing member is arranged to provide a correspondingly reduced biasing torque T_{biasing} in the opposing direction. Whereas, where the angle of the support arm increases (i.e. it moves closer to the horizontal) such that the torque created by the payload T_{payload} increases, the torsional biasing member is arranged to provide a correspondingly increased biasing torque T_{biasing} in the opposing direction.

It can also be appreciated from Figure 7 that the torsion bar is substantially untwisted (i.e. the torsional biasing reduces to zero) when the support arm is vertical. Adjustments to the torsion bar torque T_{biasing} may be made through the adjustment screws 61 on the underside of the platform (see Figure 4 a and 4b), which allow small adjustments of the position of the link 53 and hence the baseline level of the torsion bar torque T_{biasing}.

The biasing arrangement in the first embodiment of the invention has been found to be especially beneficial, because it requires a relatively low actuation force from the actuation assembly to support the payload, across a wide range of motion.

Whilst the present invention has been described and illustrated with reference to particular embodiments, it will be appreciated by those of ordinary skill in the art that the invention lends itself to many different variations not specifically illustrated herein. Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A motion generation apparatus comprising:
a platform for supporting an occupant;
a base assembly; and
three support arms arranged to support the platform above the base assembly,
wherein
each support arm is connected at its lower end to a carrier via an arm-carrier joint, and is connected at its upper end to the platform at an arm-platform joint,
wherein each carrier is moveably mounted on the base assembly such that the carrier is independently moveable in a first (X) direction and in a second (Y) direction, the first and second directions being mutually perpendicular to one another,
wherein for each support arm, one of the arm-carrier joint or the arm-platform joint is a revolute joint having a single rotational degree of freedom about a pivot axis, and the other of the arm-carrier joint or the arm-platform joint is a rotational joint having three rotational degrees of freedom.

2. A motion generation apparatus according to claim 1, wherein the base assembly comprises a first set of tracks for allowing movement of the carrier in the first direction, and a second set of tracks for allowing movement of the carrier in the second direction.

3. A motion generation apparatus according to claim 1 or claim 2, wherein for each support arm, the arm-platform joint is the revolute joint having a single rotational degree of freedom, and the arm-carrier joint is the rotational joint having three rotational degrees of freedom.

4. A motion generation apparatus according to claim 3, wherein each support arm comprises a wishbone, the wishbone being arranged such that the arm-carrier joint is located at the convergent end of the wishbone and the arm-platform joint is located at the divergent end of the wishbone.

5. A motion generation apparatus according to any preceding claim, wherein each support arm is resiliently biased against rotation about the pivot axis.

6. A motion generation apparatus according to claim 5, wherein each arm comprises a resilient biasing member for providing the resilient biasing of rotation about the pivot axis, wherein the reliant biasing member is a torsional biasing member, configured to provide a biasing torque about the pivot axis.

7. A motion generation apparatus according to claim 6, wherein the biasing torque about the pivot axis is arranged to act against a counter-torque arising from the static load of the platform.

8. A motion generation apparatus according to claim 6 or claim 7, wherein the torsional biasing member is a torsion bar.

9. A motion generation apparatus according to any preceding claim, wherein the first and second directions are contained in an X-Y plane, and a third, Z, direction extends upwardly from the X-Y plane, and wherein each support arm is inclined at an angle to the third direction.

10. A motion generation apparatus according to claim 9, wherein the apparatus is configurable between a neutral configuration and a moving configuration, and wherein in the neutral configuration, the magnitude of the angle of inclination of each support arm is substantially identical.

11. A motion generation apparatus according to claim 10, wherein in the magnitude of the angle of inclination is around 45 degrees.

12. A motion generation apparatus according to any preceding claim, comprising an actuation assembly for actuating each of the carriers in the X and Y directions.

13. A motion generation apparatus according to claim 12 comprising a controller for controlling the actuation assembly, such that the platform is able to be manoeuvred in 6 degrees of freedom.

14. A motion generation apparatus according to any preceding claim, further comprising an occupant carrier fixed relative to platform, the occupant carrier including, for example, seating for a single occupant, or tandem, side by side, or multiple seating for multiple occupants.

15. A motion generation apparatus comprising:
a platform comprising an occupant carrier;
a base assembly having a first-direction set of tracks and an orthogonal second-direction set of tracks, the first-direction set of tracks being moveable in a direction along the second-direction tracks;
three carriages mounted on the first-direction set of tracks and moveable in a direction along the first-direction, such that each carriage is independently moveable, within the plane containing the first and second directions, on the base assembly;
three wishbone arms arranged to support the platform above the base assembly, each wishbone arm being connected at its lower, converged, end to a respective one of the carriages via a joint with three degrees of rotational freedom, and being connected at its upper, diverged, end to the platform at a revolute joint having a single degree of freedom about a pivot axis; and
an actuation assembly for moving the first-direction tracks along the second-direction tracks and for moving the carriages along the first-direction tracks, thereby moving the occupant carrier in any or all of six available degrees of freedom.
